# EUROPÄISCHE PATENTSCHRIFT

(11) **EP 2 460 712 B1**
(45) Veröffentlichungstag und Bekanntmachung des Hinweises auf die Patenterteilung: **08.01.2014**
(21) Anmeldenummer: 11009008.1
(22) Anmeldetag: 12.11.2011
(51) Int. Cl.: B62D 15/02

(54) **Verfahren zum Betreiben eines Kraftwagens sowie Kraftwagen mit einer Umfelderfassungseinrichtung**
Method for operating a vehicle as well as vehicle with an environmental detection device
Procédé de fonctionnement d'un véhicule automobile et véhicule automobile doté d'un dispositif de détection d'environnement

(30) Priorität: 01.12.2010 DE 102010053156
(43) Veröffentlichungstag der Anmeldung: 06.06.2012
(73) Patentinhaber: AUDI AG, 85045 Ingolstadt (DE)
(72) Erfinder: Reichel, Michael, 85049 Ingolstadt (DE); Limbacher, Reimund, 85055 Ingolstadt (DE)
(74) Vertreter: Thielmann, Frank

(56) Entgegenhaltungen:
- DE-A1-102006 044 179
- US-A1- 2005 203 705

## Beschreibung

Die Erfindung betrifft ein Verfahren zum Betreiben eines Kraftwagens mit einer Umfelderfassungseinrichtung, einer Lenkwinkelstellvorrichtung, welche dazu ausgebildet ist, unabhängig von einer Bedienperson einen Lenkwinkel des Kraftwagens einzustellen, einem Lenkrad zur manuellen Einstellung eines Lenkwinkels des Kraftwagens durch eine Bedienperson und einer Entkopplungsvorrichtung zur zumindest teilweisen Entkopplung einer Drehbewegung des Lenkrads von einer durch die Lenkwinkelstellvorrichtung bewirkten Verstellung des Lenkwinkels des Kraftwagens, mit den Schritten: a) Erfassen eines Objekts im Umfeld des Kraftwagens mittels der Umfelderfassungseinrichtung; b) Bewerten einer Kollisionsgefahr des Kraftwagens mit dem Objekt; und c) in Abhängigkeit von der Bewertung Verstellen des Lenkwinkels des Kraftwagens mittels der Lenkwinkelstellvorrichtung. Die Erfindung betrifft auch einen Kraftwagen mit einer Umfelderfassungseinrichtung.

Es sind verschiedenste Fahrerassistenzsysteme zur Unterstützung eines Fahrzeugführers beim Führen eines Kraftwagens bekannt. Beispielsweise sind Fahrerassistenzsystem bekannt, welche Querführungsaufgaben übernehmen, indem sie ein zusätzliches Lenkmoment auf das Lenksystem des Kraftwagens applizieren. Durch dieses zusätzliche Lenkmoment soll das Fahrzeug entsprechend vorgegebener Parameter auf eine bestimmte Bahn gelenkt werden. Ein Beispiel hierfür ist das so genannte Heading Control: Dieses Fahrerassistenzsystem hat zum Ziel, das Fahrzeug so zu regeln, dass es sich entlang der Mitte der Fahrspur bewegt. Ein Kamerasystem mit angeschlossener Bildverarbeitung erfasst hierfür die nötigen Umweltdaten. Zusätzlich werden Sensordaten aus dem Fahrzeug ausgewertet (Geschwindigkeit, Querbeschleunigung, etc.). Hieraus kann in einer Datenverarbeitungseinrichtung unter Zuhilfenahme eines geeigneten Algorithmus das aufzubringende Zusatzlenkmoment berechnet werden.

Fahrerassistenzsysteme zur Querführung können als reine Warnsysteme oder als selbsttätig agierende Systeme ausgebildet sein. Das so genannte LDW (Lane Departure Warning) System nutzt eine Vibrationswarnung, um den Fahrzeugführer insbesondere in der Nähe der Fahrbahnränder vor dem Verlassen der Fahrspur zu warnen. Das so genannte LDW plus System appliziert darüber hinaus zusätzlich ein Lenkmoment, welches den Kraftwagen wieder zurück in die Fahrspur verbringt. Die hierbei zugrunde liegenden LDW Algorithmen sind reine Warnsysteme. Die so genannten HC (Heading Control Assist) Systeme dienen dem Halten des Fahrzeugs in der Fahrspurmitte. Beim HC Assist System gibt es einen so genannten Fairway, welcher ein vorgebbares Fahrband darstellt, innerhalb dessen kein aktiver Lenkeingriff erfolgt. Erst ab einem bestimmten Abstand des Fahrzeugs von der Fahrbahnmitte wird das Fahrzeug wieder zurück in seine ursprüngliche Fahrspur geregelt. Beim HC Continuous System entfällt dieser Fairway, sodass Lenkeingriffe ständig am Lenkrad spürbar sind. Durch die feste Kopplung des Lenkrades mit dem automatischen Lenkungssystem spürt der Fahrer sämtliche Eingriffe. Bei einer kontinuierlichen Lenkunterstützung und den damit verbundenen ständigen Lenkeingriffen scheint das Lenkrad ein Eigenleben zu entwickeln.

Aus der DE 10 2008 008 182 A1 ist ein Kraftfahrzeug mit einem Lenkrad, einer über das Lenkrad drehbaren Lenksäule sowie einer querverschiebbaren Steuerstange bekannt, die mit zwei zu lenkenden Rädern bewegungsgekoppelt ist. Zudem umfasst das Kraftfahrzeug ein der Längssäule zugeordnetes Überlagerungsgetriebe, über das ein durch Drehen des Lenkrads erzeugter Drehwinkel mit einem über einen mit dem Überlagerungsgetriebe gekoppelten Stellmotor erzeugten Drehwinkel zur Erzeugung eines der Bewegung der Steuerstange dienenden Überlagerungsdrehwinkel überlagerbar ist. Darüber hinaus umfasst das Kraftfahrzeug auch ein Fahrerassistenzsystem mit einer Einrichtung zum Geben eines separaten, der Bewegung der Steuerstange dienenden Lenkmoments zum aktiven Querführen des Kraftfahrzeugs. Das Überlagerungsgetriebe ist hierbei über den Stellmotor derart verstellbar, dass eine infolge der Gabe eines separaten Lenkmoments durch die Einrichtung verursachte Drehung der Lenksäule derart zumindest teilweise kompensiert wird, dass die resultierende tatsächliche Lenkraddrehbewegung verglichen mit der aus dem gegebenen Lenkmoment resultierenden theoretischen Lenkraddrehbewegung geringer ist.

Aus der DE 10 2007 016 799 B4 ist ein Verfahren zum Unterstützen des Fahrers eines Fahrzeugs bekannt. Das Fahrzeug umfasst hierbei eine Lenkung mit einem Lenkradantrieb zum Aufbringen einer Drehbewegung an dem Lenkrad. Im Rahmen des Verfahrens wird ein Objekt im Umfeld des Fahrzeugs ermittelt, das eine Gefährdung für das Fahrzeug darstellt. Sodann erfolgt ein Entkoppeln des Lenkrads von einem gelenkten Fahrzeugrad, wobei eine Drehbewegung an dem Lenkrad aufgebracht wird, die in diejenige Richtung erfolgt, die der Richtung des Ausweichmanövers entgegengesetzt ist. Es wird also aktiv eine impulsförmig ruckartige Drehbewegung auf das Lenkrad aufgebracht, um den Fahrer vor der Gefahr zu warnen und ein reflexartiges Gegenlenken zu provozieren.

Aus der DE 199 52 227 B4 ist ein Verfahren zur Steuerung einer Kraftfahrzeuglenkung bekannt, wobei die Kraftfahrzeuglenkung sowohl ein konventionelles Lenkrad als auch einen Radwinkelstellantrieb umfasst, der autonom und unabhängig von einer Bedienperson einen Lenkvorgang ausführen kann. Das Lenkrad ist hierbei während eines autonomen Lenkvorgangs von dem Radwinkelstellantrieb über eine Kupplung entkoppelt. Im Rahmen des Verfahrens kann bei Ausfall des Radwinkelstellantriebs die Kupplung eingerückt werden.

In der DE 10 2006 044 179 A1 sind ein Verfahren und eine Vorrichtung zum Unterstützen eines Fahrers beim Durchführen eines Lenkmanövers beschrieben. Der Fahrer soll das Fahrmanöver dabei zumindest zu einem erheblichen Anteil selbsttätig durchführen, weshalb der Fahrer durch Beaufschlagen einer Lenkhandhabe mit einem Drehimpuls einen richtungsweisenden Eingriff in den Lenkstrang des Fahrzeugs erfährt. An einem lenkbaren Rad des Kraftfahrzeugs kann ein Zusatzlenkwinkel zusätzlich zu dem vom Fahrer kommandierten Lenkwinkel an dem Rad eingestellt werden. Der Betrag des auf die Lenkhandhabe ausgeübten Drehmoments wird in Abhängigkeit von der Geschwindigkeit des Kraftfahrzeugs und/oder der Relativgeschwindigkeit des Kraftfahrzeugs in Bezug auf ein Objekt ermittelt.

In der US 2005/0203705 A1 ist ein Fahrerassistenzsystem beschrieben, welches Hindernisse vor dem Fahrzeug detektieren kann und in Abhängigkeit von der Detektion ein Übersetzungsverhältnis eines Lenkgetriebes des Fahrzeugs einstellt. Hierdurch wird es einem Fahrer ermöglicht, im Falle einer Kollisionsgefahr mit einer geringen Lenkbewegung bereits einen großen Lenkwinkel zu erzielen.

Es ist Aufgabe der Erfindung, ein Verfahren sowie einen Kraftwagen bereitzustellen, durch welche eine Gefährdung des Fahrzeugführers sowie anderer Verkehrsteilnehmer verringert wird.

Diese Aufgabe wird durch ein Verfahren, welches die Merkmale des Patentanspruchs 1 aufweist, sowie einen Kraftwagen, welcher die Merkmale des Patentanspruchs 8 aufweist, gelöst.

Die Erfindung betrifft ein Verfahren zum Betreiben eines Kraftwagens mit einer Umfelderfassungseinrichtung, welche insbesondere als Sensor zur Erfassung eines Fahrzeugvorfelds ausgebildet sein kann. Der Kraftwagen umfasst auch eine Lenkwinkelstellvorrichtung, welche dazu ausgebildet ist, unabhängig von einer Bedienperson einen Lenkwinkel des Kraftwagens einzustellen. Daneben umfasst der Kraftwagen ein Lenkrad zur manuellen Einstellung eines Lenkwinkels des Kraftwagens durch eine Bedienperson. Schließlich umfasst der Kraftwagen eine Entkopplungsvorrichtung zur zumindest teilweisen Entkopplung einer Drehbewegung des Lenkrads und einer durch die Lenkwinkelstellvorrichtung bewirkten Verstellung des Lenkwinkels des Kraftwagens. Das erfindungsgemäße Verfahren umfasst die folgenden Schritte:
a) Erfassen eines Objekts im Umfeld des Kraftwagens mittels der Umfelderfassungseinrichtung;
b) Bewerten einer Kollisionsgefahr des Kraftwagens mit dem Objekt, welches über die Umfelderfassungseinrichtung erfasst wurde. Die Bewertung kann insbesondere darin bestehen, dass entweder die Gefahr einer Kollision mit dem Objekt bejaht oder verneint wird. Daneben kann jedoch auch vorgesehen sein, dass eine quantitative Bewertung der Kollisionsgefahr dahingehend erfolgt, dass ein Wahrscheinlichkeitswert für die Kollision ermittelt wird;
c) in Abhängigkeit von der Bewertung aus Schritt b) Verstellen des Lenkwinkels des Kraftwagens mittels der Lenkwinkelstellvorrichtung. In Abhängigkeit von der Bewertung kann insbesondere entweder ein Verstellen oder kein Verstellen erfolgen. Im Falle, dass ein Verstellen erfolgt, kann die Art und/oder der Grad des Verstellens von der Bewertung, insbesondere einem quantitativen Bewertungswert, abhängig gemacht werden. Insbesondere kann auch eine Geschwindigkeit und/oder Rate des Verstellens in Abhängigkeit von Bewertungswerten erfolgen;
d) in Abhängigkeit vom Verstellen in Schritt c) Entkoppeln des Lenkrads mit der Entkopplungsvorrichtung, so dass die Drehbewegung des Lenkrads aufgrund des Verstellens des Lenkwinkels geringer ist als würde dasselbe Verstellen bei nicht entkoppeltem Lenkrad erfolgen. Insbesondere kann in Abhängigkeit vom Verstellen entweder ein Entkoppeln oder kein Entkoppeln des Lenkrads erfolgen. Neben einer vollständigen oder nicht vorhandenen Entkopplung kann jedoch ein Grad der Entkopplung abhängig von einer Art des Verstellens und/oder zugehöriger Verstellwerte gemacht werden. Insbesondere kann vorgesehen sein, dass das Lenkrad entweder keinerlei Drehbewegung ausführt oder aber eine solche Drehbewegung stets in dieselbe Richtung erfolgt wie das Verstellen des Lenkwinkels, jedoch mit maximal der Geschwindigkeit, mit der sich das Lenkrad drehen würde, wäre es nicht entkoppelt.

Das Verfahren erlaubt das automatische Notausweichen eines Kraftwagens vor möglichen Kollisionsobjekten. Das potentielle Kollisionsobjekt als auch der Kraftwagen sowie dessen Insassen werden zuverlässig vor Unfällen geschützt. Da es sich bei einem solchen automatischen Notausweichen meist um hochdynamische Vorgänge handelt, sind in der Regel schnelle Lenkbewegungen erforderlich. Erfolgen diese Eingriffe in die Lenkung automatisch und ist das Lenkrad wie für die manuelle Lenkung angekoppelt, ergäben sich ruckartige und schnelle Drehbewegungen am Lenkrad. Dadurch ergibt sich die Problematik, dass ein Fahrzeugführer, der z. B. seine Daumen im Lenkrad ablegt, sich diese aufgrund der schnellen Drehbewegungen durchaus brechen könnte. Ein auf diese Weise nervös agierendes Lenkrad würde die Akzeptanz von Notausweichsystemen massiv beeinträchtigen. Das vorgeschlagene Verfahren schließt diese erheblichen Nachteile aus. Es ermöglicht stark verringerte Drehbewegungen des Lenkrads auch bei dynamischen und automatischen Notausweichvorgängen, so dass das Verhalten des Lenkrads nicht nur als weniger störend empfunden wird, sondern auch der Fahrzeugführer einer erheblich verringerten Verletzungsgefahr ausgesetzt ist.

In Schritt d) ist der Grad der Entkopplung abhängig von einer Geschwindigkeit des Verstellens des Lenkwinkels und nimmt mit zunehmender Geschwindigkeit des Verstellens zu. Alternativ oder zusätzlich ist vorgesehen, dass in Schritt d) der Grad der Entkopplung abhängig von einer Rate des Verstellens des Lenkwinkels ist und mit zunehmender Rate des Verstellens zunimmt. Es kann also vorgesehen sein, dass je schneller sich das Lenkrad insbesondere in einer Notausweichsituation dreht bzw. je schneller es beschleunigt, das Lenkrad zunehmend stark entkoppelt wird und so seine Drehbewegung entsprechend reduziert wird. Auf diese Art kann die Drehbewegung des Lenkrads bedarfsgerecht an das jeweilige Fahrzeuglenkverhalten angepasst werden. Je schneller der Lenkwinkel verstellt würde, desto schneller würde sich ein nicht-entkoppeltes Lenkrad drehen und desto größer wäre die Gefährdung für einen Fahrzeugführer, der seine Hände am Lenkrad hat. Mit zunehmendem Grad der Entkopplung erfolgt so zuverlässig ein Schutz des Fahrzeugführers vor Hand- und Unterarmverletzungen. Das aufgebrachte Lenkmoment kann am Lenkrad derart ausgeblendet werden, dass seitens des Fahrers eine akzeptable Lenkradbewegung spürbar ist bzw. die Lenkraddrehgeschwindigkeit innerhalb handhabbarer Parameter bleibt.

Vorzugsweise erfolgt in Schritt d) eine vollständige Entkopplung des Lenkrads, so dass das Lenkrad bei jedem Verstellen des Lenkwinkels keine Drehbewegung ausführt. Dann sind die Hände des Fahrzeugführers auch bei sehr schnellen, ruckartigen automatischen Lenkbewegungen sehr gut geschützt.

Vorzugsweise kann jedoch auch vorgesehen sein, dass für ein Verstellen des Lenkwinkels in Schritt c) um einen Änderungslenkwinkel, welcher kleiner erfolgt und für ein Verstellen des Lenkwinkels in Schritt c) um einen Änderungslenkwinkel, welcher größer oder gleich dem vorgegebenen Schwellwert ist, in Schritt d) ein Entkoppeln des Lenkrads erfolgt. Bei nur geringen Drehbewegungen des Lenkrads, welche unter dem Schwellwert bleiben, erhält der Fahrzeugführer über das Lenkrad eine haptische Rückmeldung, welche einem natürlichen Fahrzeugverhalten bei einer Lenkbewegung entspricht. Erst wenn die Verstellwinkel so groß werden, dass sich eine Gefährdung für die Hände des Fahrzeugführers ergeben könnte, erfolgt zum Schutz des Fahrzeugführers die Entkopplung des Lenkrads. Damit ist ein guter Kompromiss zwischen natürlichem Fahrverhalten und Fahrzeugführerschutz geschaffen. Das Entkoppeln für Werte größer oder gleich dem vorgegebenen Schwellwert kann wiederum entweder vollständig sein oder hinsichtlich seines Grades an jeweilige Verstellcharakteristika angepasst sein.

Vorzugsweise umfasst die Entkopplungsvorrichtung eine Überlagerungsvorrichtung mit einem Stellmotor und insbesondere einem Getriebe, welche in die Drehbewegung einer über das Lenkrad drehbaren Lenksäule entkoppelnd dergestalt eingreift, dass eine durch die Lenkwinkelstellvorrichtung bewirkte Drehung der Lenksäule zu einer geringeren Drehbewegung des Lenkrads führt als hätte der Eingriff nicht stattgefunden. Diese Ausgestaltung garantiert eine effektive und zuverlässige Entkopplung des Lenkrads und kann auch bei sehr schnell erfolgenden automatischen Lenkbewegungen in Notausweichsituationen ausreichend zügig erfolgen. Zudem ist eine mehrstufige Einstellung des Grads der Entkopplung möglich.

Vorzugsweise wird die Entkopplung durch eine Steuerungsvorrichtung bewirkt, welche dazu ausgebildet ist, die Lenkwinkelstellvorrichtung so anzusteuern, dass eine Verstellung des Lenkwinkels des Kraftwagens bewirkt wird, und dazu ausgebildet ist, in Abhängigkeit von der Ansteuerung der Lenkwinkelstellvorrichtung den Stellmotor anzusteuern. Diese Ausgestaltung garantiert, dass ein Entkoppeln des Lenkrads nahezu ohne Verzögerung mit dem Verstellen des Lenkwinkels erfolgen kann. Die Reaktionszeiten für die Entkopplung werden gegenüber einem Einsetzen des Verstellen gering gehalten. Das Verstellen und das Entkoppeln kann koordiniert erfolgen.

Vorzugsweise erfolgt ein Entkoppeln des Lenkrads mit der Entkopplungsvorrichtung stets dann, wenn ein Verstellen des Lenkwinkels des Kraftwagens mittels der Lenkwinkelstellvorrichtung erfolgt. Dann ist auch bei Nichtvorliegen einer Kollisionsgefahr im Falle einer automatisch durchgeführten Querführung eine unerwünschte Drehbewegung des Lenkrads vermieden. Insbesondere dann, wenn dem Fahrer die Lenkaufgabe von einem Fahrerassistenzsystem vollständig abgenommen wird, erfolgen keine störenden Eingriffe in das Lenkrad. Für den Fahrzeugführer wird der Fahrkomfort erhöht und die körperliche Belastung reduziert.

Vorzugsweise kann die Umfelderfassungseinrichtung einen Abstandsensor und/oder einen Ultraschallsensor und/oder eine Kamera und/oder einen Radarsensor und/oder einen Lidarsensor umfassen. Diese Art von Sensoren bzw. Detektoren garantiert eine zuverlässige Erfassung eines Objekts in Schritt a) des Verfahrens und ermöglicht so eine qualitativ hochwertige Bewertung in Schritt b).

Ein erfindungsgemäßer Kraftwagen umfasst eine Umfelderfassungseinrichtung , welche dazu ausgebildet ist, ein Objekt im Umfeld des Kraftwagens zu erfassen, eine Lenkwinkelstellvorrichtung, welche dazu ausgebildet ist, unabhängig von einer Bedienperson einen Lenkwinkel des Kraftwagens einzustellen, ein Lenkrad zur manuellen Einstellung eines Lenkwinkels des Kraftwagens durch eine Bedienperson, eine Entkopplungsvorrichtung zur zumindest teilweisen Entkopplung einer Drehbewegung des Lenkrads von einer durch die Lenkwinkelstellvorrichtung bewirkten Verstellung des Lenkwinkels des Kraftwagens, und eine Datenverarbeitungsvorrichtung, welche dazu ausgebildet ist, in Abhängigkeit von Daten betreffend ein von der Umfelderfassungseinrichtung erfasstes Objekt eine Kollisionsgefahr des Kraftwagens mit dem Objekt zu bewerten und in Abhängigkeit von der Bewertung ein Verstellen des Lenkwinkels des Kraftwagens festzulegen. Die Datenverarbeitungsvorrichtung ist hierbei ferner dazu ausgebildet, in Abhängigkeit vom festgelegten Verstellen ein Entkoppeln des Lenkrads mit der Entkopplungsvorrichtung so festzulegen, dass eine resultierende Drehbewegung des Lenkrads bei Ausführung des festgelegten Verstellens des Lenkwinkels geringer ist als würde dasselbe Verstellen bei nicht-entkoppeltem Lenkrad erfolgen. Die Datenverarbeitungsvorrichtung kann insbesondere in einem Fahrerassistenzsystem eines Kraftwagens vorliegen. Sie kann auch eine Steuerungsvorrichtung umfassen, welche dazu ausgebildet ist, die Lenkwinkelstellvorrichtung und/oder einen Stellmotor der Entkopplungsvorrichtung zu steuern.

Die mit Bezug auf das erfindungsgemäße Verfahren dargestellten bevorzugten Ausführungsformen und deren Vorteile gelten entsprechend für den erfindungsgemäßen Kraftwagen.

Weitere Merkmale der Erfindung ergeben sich aus den Ansprüchen, den Figuren und der Figurenbeschreibung. Die vorstehend in der Figurenbeschreibung genannten Merkmale und Merkmalskombinationen wie auch die in der Figurenbeschreibung genannten Merkmale und Merkmalskombinationen und/oder die in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Anhand von Ausführungsbeispielen wird die Erfindung im Folgenden näher erläutert. Es zeigen:
- Fig. 1: eine schematische Darstellung eines Kraftwagens mit einer Lenkwinkelstellvorrichtung und einer Entkopplungsvorrichtung;
- Fig. 2: eine schematische Darstellung einer Notausweichsituation im Straßenverkehr; und
- Fig. 3: einen Graphen für eine schwellwertabhängige Entkopplung.

In den Figuren sind gleiche oder funktionsgleiche Elemente mit den gleichen Bezugszeichen versehen.

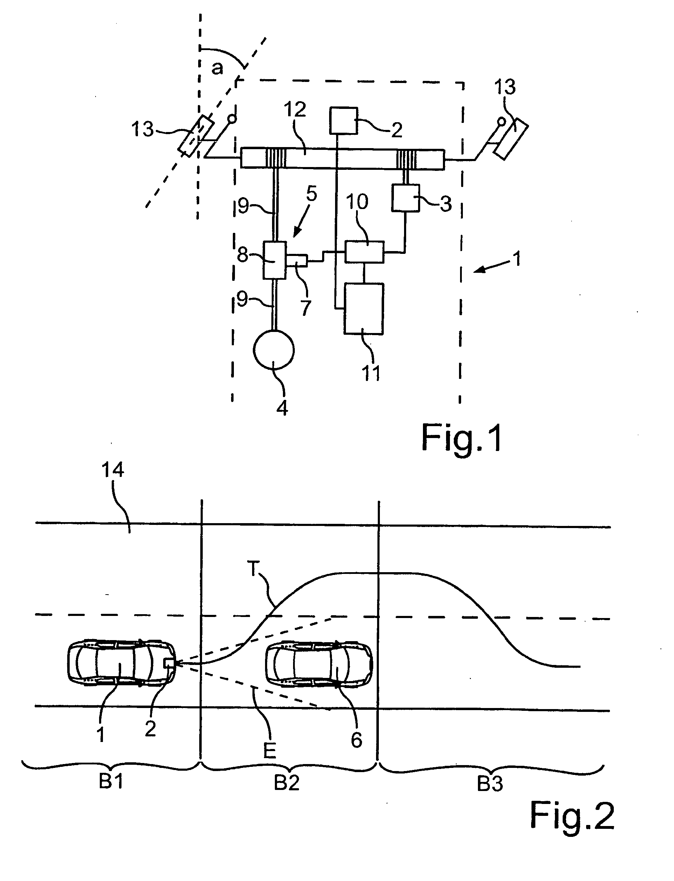

Fig. 1 zeigt in schematischer Draufsicht einen Frontbereich eines Kraftwagens 1. Eine Zahnstange 12 erlaubt die Lenkung der beiden Vorderräder 13 des Kraftwagens 1. Für eine manuelle Lenkung durch einen Fahrzeugführer ist die Zahnstange 12 hierzu über eine Lenkstange 9 mit einem Lenkrad 4 verbunden. Eine am Lenkrad 4 vom Fahrzeugführer durchgeführte Drehbewegung wird auf die Zahnstange 12 und schließlich auf die Räder 13 übersetzt, so dass sich ein Lenkwinkel a einstellen lässt.

Darüber hinaus verfügt der Kraftwagen 1 auch über eine Lenkwinkelstellvorrichtung, mit der ein zusätzliches Lenkmoment auf das Lenksystem automatisch aufgebracht werden kann. Diese Lenkwinkelstellvorrichtung ist im Ausführungsbeispiel als elektrische Servolenkung (Electric Power Steering) EPS 3 realisiert. Das EPS 3 umfasst einen Motor und ein Getriebe, um Kraft auf die Zahnstange 12 zu übertragen. Auf diese Weise eingebrachte Kräfte wirken sich auf die Räder 13 aus und führen zu einer Veränderung des Lenkwinkels a. Gleichzeitig wirken sich die Kräfte auch auf das Lenkrad 4 aus. Die Verbindung zwischen Zahnstange 12 und Lenkrad 4 über die Lenkstange 9 ist bei Vorrichtungen ohne Überlagerungslenkung geometrisch fest vorgegeben (d. h. es besteht ein konstantes Übersetzungsverhältnis). Jede Verschiebung der Zahnstange 12 würde dann gleichzeitig auch zu einer Drehbewegung des Lenkrads 4 führen.

Eine Überlagerungslenkung 5 ermöglicht eine Anpassung der Lenkübersetzung vom Lenkrad 4 zur Zahnstange 12. Die Überlagerungslenkung 5 kann genutzt werden, um Eingriffe, die durch das EPS 3 erfolgen, am Lenkrad 4 sozusagen auszublenden. Hierfür umfasst die Überlagerungslenkung 5 ein Getriebe 8 und einen Stellmotor 7. Sie ist mit einer Steuerungsvorrichtung 10 verbunden, an welcher auch das EPS 3 angeschlossen ist. Wird der Motor des EPS 3 über die Steuerungsvorrichtung 10 angesteuert, so wird im gleichen Maße auch der Stellmotor 7 der Überlagerungslenkung 5 aktiviert, um die von der EPS 3 bewirkten Lenkbewegungen am Lenkrad 4 auszublenden. Durch das Getriebe 8 kann die Übersetzung der beiden Enden der Lenkstange 9 angepasst werden und so eine Einstellung der gewünschten Drehbewegung des Lenkrads 4 erfolgen. Es ist jedoch auch ein vollständiges Entkoppeln des Lenkrads 4 möglich, so dass dieses bei jeder beliebigen Bewegung der Zahnstange 12 keine Drehbewegung mehr ausführt.

Die Steuerungsvorrichtung 10 ist mit einem Computer 11 verbunden, durch den eine Fahrerassistenz in Form einer automatischen Querführung bereitgestellt wird. Der Computer 11 ist insbesondere dazu ausgebildet, einen Querführungsassistenten in Form eines Spurhalteunterstützungssystems bzw. in Form eines Spurhalteassistenten bereitzustellen. Der Computer 11 legt dann entsprechend einem vorgegebenen Algorithmus Eingriffe in die Lenkanlage 9 fest, und steuert entsprechend die Steuerungsvorrichtung 10 an, welche ihrerseits das EPS 3 und die Überlagerungslenkung 5 ansteuert, um die Vorgaben des Computers 11 zu realisieren.

Der Computer 11 umfasst auch einen Algorithmus, mit dem sich ein Verfahren zum automatischen Notausweichen durchführen lässt. Hierzu ist der Computer 11 mit einer Umfelderfassungseinrichtung in Form eines Abstandssensors 2 verbunden.

Fig. 2 zeigt in schematischer Draufsicht eine Fahrbahn 14, auf dessen rechter Spur sich der Kraftwagen 1 in Fahrtrichtung (im Bild von links nach rechts) bewegt. Vor ihm befindet sich auf der Fahrbahn ein weiterer Kraftwagen 6. Es soll ein mögliches Szenario für eine Notausweichsituation geschildert werden, wobei angegeben wird, wie die Lenkung des Kraftwagens 1 jeweils reagiert: Der Kraftwagen 6 bremst unvermittelt ab und befindet sich schließlich im Stillstand. Er stellt damit ein potentielles Kollisionsobjekt für den noch fahrenden Kraftwagen 1 dar. Da eine normale Fahrsituation vorlag, ist im Abschnitt B1 eine Entkopplung des Lenkrads 4 von der Zahnstange 12 nicht gegeben. Der Führer des Kraftwagens 1 kann die Lenkung ohne Einschränkungen manuell bedienen und erhält eine unmittelbare Rückmeldung über den eingestellten Lenkwinkel a am Lenkrad 4.

Der Kraftwagen 6 befindet sich im Erfassungsbereich E des Abstandssensors 2. Dieser erkennt, dass sich der Abstand zwischen dem Kraftwagen 1 und dem Kraftwagen 6 zunehmend verringert und übergibt diese Daten an den Computer 11. Ein im Computer 11 ablaufender Algorithmus bewertet die Kollisionsgefahr des Kraftwagens 1 mit dem Kraftwagen 6 und kommt zu dem Ergebnis, dass ein automatisches Notausweichen geboten erscheint, um einen Unfall zu vermeiden. Es wird eine Trajektorie T berechnet sowie ein zugehöriger Verlauf des Lenkwinkels a, um diese Trajektorie T zu realisieren. Um die Berechnung in die Tat umzusetzen, übergibt der Computer 11 geeignete Daten an die Steuerungsvorrichtung 10, welche geeignete Steuersignale an das EPS 3 sendet, um die angeforderten Lenkwinkel a automatisch über die Zahnstange 12 einzustellen. Im Abschnitt B2 erfolgt also eine über das EPS 3 automatisch realisierte Adaptivlenkung.

Um eine Gefährdung des Fahrzeugführers durch ein sich schnell drehendes Lenkrad 4 auszuschließen, wird dieses im Ausführungsbeispiel im Abschnitt B2 zumindest teilweise von der Zahnstange 12 entkoppelt. Hierzu steuert die Steuerungsvorrichtung 10 den Stellmotor 7 so an, dass über das Getriebe 8 die Drehbewegung des Lenkrads 4 reduziert wird. Gemäß der Trajektorie T in Abschnitt B2 führt das Lenkrad 4 zwar weiterhin eine Drehbewegung aus; diese ist jedoch erheblich geringer, als hätte eine Entkopplung nicht stattgefunden. Durch die gemächliche Nachführung des Lenkrads 4 erhält der Fahrzeugführer zwar eine haptische Rückmeldung über den automatisch ausgeführten Lenkvorgang; eine Gefährdung seiner Hände durch ruckartige Bewegungen des Lenkrads 4 ist jedoch ausgeschlossen.

Erst wenn keine Kollisionsgefahr mehr besteht, wird das Lenkrad 4 im Abschnitt B3 wieder vollständig durch geeignete Befehle des Computers 11 an die Zahnstange 12 gekoppelt. Der Fahrzeugführer kann nun wieder manuell in die rechte Fahrspur zurücklenken.

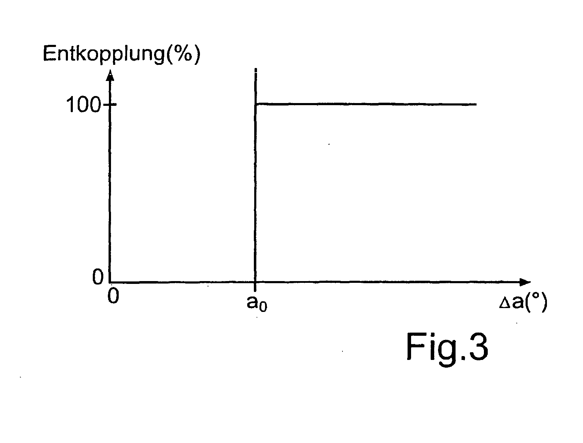

Fig. 3 zeigt eine alternative Möglichkeit der Entkopplung. Im Graphen aufgetragen ist der Grad der Entkopplung gegen einen Änderungslenkwinkel Δa. Bis zu einem Schwellwert a₀ erfolgt keinerlei Entkopplung des Lenkrads 4. Erst wenn der Änderungslenkwinkel Δa diesen Schwellwert a₀ überschreitet, erfolgt eine vollständige Entkopplung und das Lenkrad dreht sich nicht mehr mit. Der Schwellwert a₀ sollte insbesondere kleiner als 360° sein, um sehr gefährliche schnelle Mehrfachumdrehungen des Lenkrads auszublenden.

Zusammenfassend erlaubt die vorgestellte Idee der intelligenten Kopplung von EPS 3 und Adaptivlenkung, sowohl Notausweichtrajektorien zu fahren als auch die Daumen des Fahrzeugführers zu schützen. Dies wird erreicht, indem das Lenkrad 4 zumindest während des automatischen Notausweichens wenigstens teilweise entkoppelt wird.

## Patentansprüche

1. Verfahren zum Betreiben eines Kraftwagens (1) mit einer Umfelderfassungseinrichtung (2), einer Lenkwinkelstellvorrichtung (3), welche dazu ausgebildet ist, unabhängig von einer Bedienperson einen Lenkwinkel (a) des Kraftwagens (1) einzustellen, einem Lenkrad (4) zur manuellen Einstellung eines Lenkwinkels (a) des Kraftwagens (1) durch eine Bedienperson und einer Entkopplungsvorrichtung (5) zur zumindest teilweisen Entkopplung einer Drehbewegung des Lenkrads (4) von einer durch die Lenkwinkelstellvorrichtung (3) bewirkten Verstellung des Lenkwinkels (a) des Kraftwagens (1), mit den Schritten:
a) Erfassen eines Objekts (6) im Umfeld (E) des Kraftwagens (1) mittels der Umfelderfassungseinrichtung (2);
b) Bewerten einer Kollisionsgefahr des Kraftwagens (1) mit dem Objekt (6); und
c) In Abhängigkeit von der Bewertung Verstellen des Lenkwinkels (a) des Kraftwagens (1) mittels der Lenkwinkelstellvorrichtung (3),
**gekennzeichnet durch** den Schritt
d) In Abhängigkeit vom Verstellen in Schritt c) Entkoppeln des Lenkrads (4) mit der Entkopplungsvorrichtung (5), so dass die Drehbewegung des Lenkrads (4) aufgrund des Verstellens des Lenkwinkels (a) geringer ist als würde das selbe Verstellen bei nicht entkoppeltem Lenkrad (4) erfolgen, wobei der Grad der Entkopplung abhängig von einer Geschwindigkeit und/oder einer Rate des Verstellens des Lenkwinkels (a) ist und mit zunehmender Geschwindigkeit bzw. Rate des Verstellens zunimmt.

2. Verfahren nach Anspruch 1,
**dadurch gekennzeichnet, dass**
in Schritt d) eine vollständige Entkopplung des Lenkrads (4) erfolgt, so dass das Lenkrad (4) bei jedem Verstellen des Lenkwinkels (a) keine Drehbewegung ausführt.

3. Verfahren nach Anspruch 1,
**dadurch gekennzeichnet, dass**
für ein Verstellen des Lenkwinkels (a) in Schritt c) um einen Änderungslenkwinkel (Δa), welcher kleiner als ein vorgegebener Schwellwert (a₀) ist, in Schritt d) kein Entkoppeln des Lenkrads (4) erfolgt und für ein Verstellen des Lenkwinkels (a) in Schritt c) um einen Änderungslenkwinkel (Δa), welcher größer oder gleich dem vorgegebenen Schwellwert (a₀) ist, in Schritt d) ein Entkoppeln des Lenkrads (4) erfolgt.

4. Verfahren nach einem der vorhergehenden Ansprüche
**dadurch gekennzeichnet, dass**
die Entkopplungsvorrichtung eine Überlagerungsvorrichtung (5) mit einem Stellmotor (7) und insbesondere einem Getriebe (8) umfasst, welche in die Drehbewegung einer über das Lenkrad (4) drehbaren Lenksäule (9) entkoppelnd dergestalt eingreift, dass eine durch die Lenkwinkelstellvorrichtung (3) bewirkte Drehung der Lenksäule (9) zu einer geringeren Drehbewegung des Lenkrads (4) führt als hätte der Eingriff nicht stattgefunden.

5. Verfahren nach Anspruch 4,
**dadurch gekennzeichnet, dass**
die Entkopplung durch eine Steuerungsvorrichtung (10) bewirkt wird, welche dazu ausgebildet ist, die Lenkwinkelstellvorrichtung (3) so anzusteuern, dass eine Verstellung des Lenkwinkels (a) des Kraftwagens (1) bewirkt wird, und dazu ausgebildet ist, in Abhängigkeit von der Ansteuerung der Lenkwinkelstellvorrichtung (3) den Stellmotor (7) anzusteuern.

6. Verfahren nach einem der vorhergehenden Ansprüche,
**dadurch gekennzeichnet, dass**
ein Entkoppeln des Lenkrads (4) mit der Entkopplungsvorrichtung (5) stets dann erfolgt, wenn ein Verstellen des Lenkwinkels (a) des Kraftwagens (1) mittels der Lenkwinkelstellvorrichtung (3) erfolgt.

7. Verfahren nach einem der vorhergehenden Ansprüche,
**dadurch gekennzeichnet, dass**
die Umfelderfassungseinrichtung einen Abstandssensor (2) und/oder einen Ultraschallsensor und/oder eine Kamera und/oder einen Radarsensor und/oder einen Lidarsensor umfasst.

8. Kraftwagen (1) mit einer Umfelderfassungseinrichtung (2), welche dazu ausgebildet ist, ein Objekt (6) im Umfeld des Kraftwagens (1) zu erfassen, einer Lenkwinkelstellvorrichtung (3), welche dazu ausgebildet ist, unabhängig von einer Bedienperson einen Lenkwinkel (a) des Kraftwagens (1) einzustellen, einem Lenkrad (4) zur manuellen Einstellung eines Lenkwinkels (a) des Kraftwagens (1) durch eine Bedienperson, einer Entkopplungsvorrichtung (5) zur zumindest teilweisen Entkopplung einer Drehbewegung des Lenkrads (4) von einer durch die Lenkwinkelstellvorrichtung (3) bewirkten Verstellung des Lenkwinkels (a) des Kraftwagens (1), und einer Datenverarbeitungsvorrichtung (11), welche dazu ausgebildet ist, in Abhängigkeit von Daten betreffend ein von der Umfelderfassungseinrichtung (2) erfasstes Objekt (6) eine Kollisionsgefahr des Kraftwagens (1) mit dem Objekt (6) zu bewerten und in Abhängigkeit von der Bewertung ein Verstellen des Lenkwinkels (a) des Kraftwagens (1) festzulegen, wobei
die Datenverarbeitungsvorrichtung (11) dazu ausgebildet ist, in Abhängigkeit vom festgelegten Verstellen ein Entkoppeln des Lenkrads (4) mit der Entkopplungsvorrichtung (5) so festzulegen, dass eine resultierende Drehbewegung des Lenkrads (4) bei Ausführung des festgelegten Verstellens des Lenkwinkels (a) geringer ist als würde das selbe Verstellen bei nicht entkoppeltem Lenkrad (4) erfolgen,
**dadurch gekennzeichnet, dass**
der Grad der Entkopplung abhängig von einer Geschwindigkeit und/oder einer Rate des Verstellens des Lenkwinkels (a) ist und mit zunehmender Geschwindigkeit bzw. Rate des Verstellens zunimmt.

## Claims

1. Method for operating a motor vehicle (1) comprising an environment detection means (2), a steering angle adjustment device (3) which is configured to adjust a steering angle (a) of the motor vehicle independently of an operator, a steering wheel (4) for manual adjustment of a steering angle (a) of the motor vehicle (1) by an operator, and a decoupling device (5) for decoupling a rotation of the steering wheel (4) at least in part from an adjustment of the steering angle (a) of the motor vehicle (1) brought about by the steering angle adjustment device (3), comprising the steps of:
a) detecting an object (6) in the surroundings (E) of the motor vehicle (1) by means of the environment detection means (2);
b) evaluating a collision risk of the motor vehicle (1) with the object (6); and
c) depending on the evaluation, adjusting the steering angle (a) of the motor vehicle (1) by means of the steering angle adjustment device (3);
**characterised by** the step of:
d) depending on the adjustment in step c), decoupling the steering wheel (4) by means of the decoupling device (5), such that the rotation of the steering wheel (4) caused by the adjustment of the steering angle (a) is smaller than if an identical adjustment were made when the steering wheel (4) was not decoupled, the degree of decoupling being dependent on a speed and/or a rate of adjustment of the steering angle (a) and increasing as the speed or rate of the adjustment increases.

2. Method according to claim 1, **characterised in that** the steering wheel (4) is completely decoupled in step d), such that the steering wheel (4) does not rotate upon each adjustment of the steering angle (a).

3. Method according to claim 1, **characterised in that** the steering wheel (4) is not decoupled in step d) in order to adjust the steering angle (a) in step c) about a change steering angle (Δa), which is smaller than a predetermined threshold value (a₀), and the steering wheel (4) is decoupled in step d) in order to adjust the steering angle (a) in step c) about a change steering angle (Δa), which is greater than or equal to the predetermined threshold value (a₀).

4. Method according to any of the preceding claims, **characterised in that** the decoupling device comprises a superimposition device (5) which has a servomotor (7) and in particular a gear mechanism (8) and engages in the rotation of a steering column (9), which is rotatable by the steering wheel (4), in a decoupling manner, such that a rotation of the steering column (9) caused by the steering angle adjustment device (3) results in a smaller rotation of the steering wheel (4) than if the engagement had not taken place.

5. Method according to claim 4, **characterised in that** decoupling is brought about by a control device (10) which is configured to control the steering angle adjustment device (3) in such a way that the steering angle (a) of the motor vehicle (1) is adjusted, and which is further configured to control the servomotor (7) depending on the control of the steering angle adjustment device (3).

6. Method according to any of the preceding claims, **characterised in that** the steering wheel (4) is always decoupled by means of the decoupling device (5) when the steering angle (a) of the motor vehicle (1) is adjusted by means of the steering angle adjustment device (3).

7. Method according to any of the preceding claims, **characterised in that** the environment detection means comprises a distance sensor (2) and/or an ultrasound sensor and/or a camera and/or a radar sensor and/or a lidar sensor.

8. Motor vehicle (1) comprising an environment detection means (2) configured to detect an object (6) in the surroundings of the motor vehicle (1), a steering angle adjustment device (3) configured to adjust a steering angle (a) of the motor vehicle (1) independently of an operator, a steering wheel (4) for manual adjustment of a steering angle (a) of the motor vehicle (1) by an operator, a decoupling device (5) for decoupling a rotation of the steering wheel (4) at least in part from an adjustment of the steering angle (a) of the motor vehicle (1) brought about by the steering angle adjustment device (3), and a data processing device (11) configured to evaluate a collision risk of the motor vehicle (1) with an object (6) depending on the data relating to an object (6) detected by the environment detection means (2) and to determine an adjustment of the steering angle (a) of the motor vehicle (1) depending on the evaluation, the data processing device (11) being configured to set, depending on the determined adjustment, a decoupling of the steering wheel (4) by means of the decoupling device (5) such that a resulting rotation of the steering wheel (4) during execution of the determined adjustment of the steering angle (a) is smaller than if the same adjustment were made when the steering wheel (4) was not decoupled, **characterised in that** the degree of decoupling is dependent on a speed and/or rate of the adjustment of the steering angle (a) and increases as the speed or rate of adjustment increases.

## Revendications

1. Procédé de fonctionnement d'un véhicule automobile (1) comprenant un appareil de détection d'environnement (2), un dispositif de réglage d'angle de braquage (3), configuré pour régler indépendamment d'un opérateur un angle de braquage (a) du véhicule automobile (1), un volant (4) pour le réglage manuel d'un angle de braquage (a) du véhicule automobile (1) par un opérateur et un dispositif de découplage (5) pour un découplage au moins partiel d'un mouvement rotatif du volant (4) d'un ajustement de l'angle de braquage (a) du véhicule automobile (1) exercé par le dispositif de réglage d'angle de braquage (3), comprenant les étapes suivantes :
a) détection d'un objet (6) dans l'environnement (E) du véhicule automobile (1) au moyen de l'appareil de détection d'environnement (2) ;
b) évaluation d'un risque de collision du véhicule automobile (1) avec l'objet (6) ; et
c) en fonction de l'évaluation, réglage de l'angle de braquage (a) du véhicule automobile (1) au moyen du dispositif de réglage d'angle de braquage (3),
**caractérisé par** l'étape
d) en fonction du réglage à l'étape c), découplage du volant (4) avec le dispositif de découplage (5), de sorte que le mouvement rotatif du volant (4), en raison de l'ajustement de l'angle de braquage (a), est inférieur à ce que serait le même ajustement si le volant (4) n'était pas découplé, le degré de découplage dépendant d'une vitesse et/ou d'un taux d'ajustement de l'angle de braquage (a) et augmentant en même temps que la vitesse ou le taux d'ajustement.

2. Procédé selon la revendication 1,
**caractérisé en ce que**
à l'étape d) un découplage total du volant (4) se produit, de sorte que le volant (4) n'effectue aucun mouvement rotatif à chaque ajustement de l'angle de braquage (a).

3. Procédé selon la revendication 1,
**caractérisé en ce que**
pour un ajustement de l'angle de braquage (a) à l'étape c) à un angle de braquage modificateur (Δa), qui est inférieur à une valeur seuil (a₀) prédéfinie, à l'étape d) aucun découplage du volant (4) ne se produit et pour un ajustement de l'angle de braquage (a) à l'étape c) à un angle de braquage modificateur (Δa), qui est supérieur ou égale à une valeur seuil (a₀) prédéfinie, à l'étape d) un découplage du volant (4) se produit.

4. Procédé selon l'une des revendications précédentes,
**caractérisé en ce que**
le dispositif de découplage comprend un dispositif de superposition (5) avec un servomoteur (7) et notamment une transmission (8), lequel dispositif de superposition s'enclenche par découplage dans le mouvement rotatif d'une colonne de direction (9) pivotant via le volant (4), de telle sorte qu'une rotation de la colonne de direction (9) exercée par le dispositif de réglage d'angle de braquage (3) entraîne un mouvement rotatif du volant (4) moindre par rapport à ce qu'il aurait été si l'enclenchement n'avait pas eu lieu.

5. Procédé selon la revendication 4,
**caractérisé en ce que**
le découplage est exercé par un dispositif de commande (10), configuré pour commander le dispositif de réglage d'angle de braquage (3) de sorte qu'un ajustement de l'angle de braquage (a) du véhicule automobile (1) est exercé, et configuré pour commander le servomoteur (7) en fonction de la commande du dispositif de réglage d'angle de braquage (3).

6. Procédé selon l'une des revendications précédentes,
**caractérisé en ce que**
un découplage du volant (4) avec le dispositif de découplage (5) se produit systématiquement lorsqu'un ajustement de l'angle de braquage (a) du véhicule automobile (1) se produit au moyen du dispositif de réglage d'angle de braquage (3).

7. Procédé selon l'une des revendications précédentes,
**caractérisé en ce que**
l'appareil de détection d'environnement comprend un capteur de distance (2) et/ou un capteur à ultrasons et/ou une caméra et/ou un capteur radar et/ou un capteur lidar.

8. Véhicule automobile (1) comprenant un appareil de détection d'environnement (2), configuré pour détecter un objet (6) dans l'environnement du véhicule automobile (1), un dispositif de réglage d'angle de braquage (3), configuré pour régler indépendamment d'un opérateur un angle de braquage (a) du véhicule automobile (1), un volant (4) pour le réglage manuel d'un angle de braquage (a) du véhicule automobile (1) par un opérateur, un dispositif de découplage (5) pour un découplage au moins partiel d'un mouvement rotatif du volant (4) d'un ajustement de l'angle de braquage (a) du véhicule automobile (1) exercé par le dispositif de réglage d'angle de braquage (3), et un dispositif de traitement de données (11), configuré pour évaluer en fonction des données concernant un objet (6) détecté par l'appareil de détection d'environnement (2) un risque de collision du véhicule automobile (1) avec l'objet (6) et définir en fonction de l'évaluation un ajustement de l'angle de braquage (a) du véhicule automobile (1),
le dispositif de traitement de données (11) étant configuré pour définir en fonction de l'ajustement défini un découplage du volant (4) avec le dispositif de découplage (5), de sorte qu'un mouvement rotatif du volant (4) qui en résulte est plus petit lorsque l'ajustement défini de l'angle de braquage (a) est réalisé par rapport à ce que serait le même ajustement si le découplage du volant (4) ne se produisait pas,
**caractérisé en ce que**
le degré de découplage dépend d'une vitesse et/ou d'un taux d'ajustement de l'angle de braquage (a) et augmente en même temps que la vitesse ou le taux d'ajustement.
